# EUROPÄISCHE PATENTSCHRIFT

(11) **EP 0 802 338 B1**
(45) Veröffentlichungstag und Bekanntmachung des Hinweises auf die Patenterteilung: **24.09.2003**
(21) Anmeldenummer: 97105756.7
(22) Anmeldetag: 08.04.1997
(51) Int. Cl.: F16C 33/20

(54) **Verfahren zur Herstellung einer gerollten Metall/Kunstoff-Verbundbuchse**
Method of manufacturing rolled metal plastic bearing sleeves
Procédé de fabrication de douilles rouleés de palier en métal-plastique

(30) Priorität: 20.04.1996 DE 19615757
(43) Veröffentlichungstag der Anmeldung: 22.10.1997
(73) Patentinhaber: Wieland-Werke AG, 89070 Ulm (DE)
(72) Erfinder: Scharf, Hans, Dipl.-Ing. (FH), 89165 Dietenheim (DE); Kirchner, Heinz D., 97877 Wertheim (DE)

(56) Entgegenhaltungen:
- EP-A- 0 635 106
- WO-A-93/22576
- DE-U- 1 904 625
- FR-A- 1 342 927
- GB-A- 1 388 116
- GB-A- 2 270 720
- US-A- 3 008 779
- US-A- 4 106 962
- US-A- 4 909 638
- PATENT ABSTRACTS OF JAPAN vol. 10, no. 265 (M-515), 10.September 1986 & JP 61 088022 A (SUTAARAITO), 6.Mai 1986,
- PATENT ABSTRACTS OF JAPAN vol. 12, no. 145 (M-693), 6.Mai 1988 & JP 62 266217 A (DAIDO), 19.November 1987,
- Prospekt: "HL Wartungsfreie Gleitlager, Kurzinformation", Glacier Industrial Bearings
- Prospekt: "VBK Kunststoff-Verbundbuchsen für Gleitlager", Ausgabe 1991, Wieland-Werke AG

## Beschreibung

Die Erfindung betrifft ein Verfahren zur Herstellung einer gerollten Metall/Kunststoff-Verbundbuchse.

Bekannt sind Metall/Kunststoff-Verbundbuchsen, bei denen die Kunststoffschicht
a) durch eine Zwischenschicht (= dritte Schicht im Verbund) mit dem metallischen Rücken verklammert wird (vgl. beispielsweise den WIELAND-Prospekt: "VBK Kunststoff-Verbundbuchsen für Gleitlager"/Ausgabe 1991),
b) durch Aufwalzen in einem Lochblech verankert wird (vgl. beispielsweise den Prospekt: "HL - Wartungsfreie Gleitlager" der Firma Glacier).

Beide Verfahren erfordern eine Vielzahl von Arbeitsgängen und müssen nach dem Aufbringen der Kunststoffschicht noch im planen Zustand auf Länge und Breite geschnitten und kalibriert werden.

Weiter ist aus der US 3 008 779 A ein Verfahren bekannt, wobei die Kunststofschicht durch Ausspritzen einer aus einer Platine bereits rundgeformten Buchse mit Kunststoff aufgebracht wird.

Demgegenüber liegt der Erfindung die Aufgabe zugrunde, die Herstellung der Verbundbuchse kostengünstiger zu realisieren und gleichzeitig teure Nachbearbeitungsschritte wie z. B. das Kalibrieren auf Fertigmaß bzw. das Anbringen von weiteren Konstruktionsmerkmalen, wie Fugen, Dichtlippen, Nuten etc. kostengünstig in den "normalen" Fertigungsablauf zu integrieren.

Die Aufgabe wird erfindungsgemäß durch die Merkmale des Anspruchs 1 gelöst, wobei unter Rundformen z. B. Rundrollen, Rundbiegen usw. verstanden werden soll. Zur Erläuterung des Begriffes "Spritzgieß-/Spritzpreßmaschine" wird beispielsweise auf DUBBEL: "Handbuch für den Maschinenbau" (14. Auflage/1981), S.954/955, verwiesen. Durch die erfindungsgemäße Wahl der Verfahrensschritte wird insbesondere eine günstige Halterung des Kunststoffes in den konisch zur Buchsenmitte hin verformten Löchern erzielt. Der Spritzgieß-/Spritzpreßmaschine kann die fertige Verbundbuchse entnommen werden; denn die Spritzgieß-/Spritzpreßmaschine erzeugt die Fertigungstoleranzen. Beim Abspritzen füllen sich sämtliche Hohlräume der Buchse mit Kunststoff und erzeugen den fertigen Innendurchmesser der Buchse. Es können somit weniger engtolerierte und damit billigere Vormaterialbänder eingesetzt werden. Durch den Abspritzdruck legt sich zugleich die rundgeformte Buchse an die Werkzeugform an und erzeugt so eine zusätzliche Toleranzverbesserung am Außendurchmesser der fertig abgespritzten Buchse. Wird z. B. als Kunststoff Polyamid mit eingelagertem PTFE verwendet, so wird dieser vorzugsweise bei 245 bis 265 °C verspritzt.

Durch die bei der Abkühlung des Kunststoffes eintretende Schwindung zieht sich der Kunststoff besonders im Bereich der Löcher auf der Innenfläche stärker zusammen, so daß sich hier Vorratstaschen für die Schmiermittel, insbes. für die Initialbefettung, ausbilden.

Die Verwendung eines Spritzgieß-, Spritzpreß- oder Spritzblasprozesses zur Herstellung einer Gleitschicht ist zwar an sich bekannt (vgl. beispielsweise EPS 0.635.106), jedoch nicht in Verbindung mit einer gelochten Buchse und metallischen Werkstoffen.

Nach einer besonderen Ausführungsform des erfindungsgemäßen Verfahrens sind die Enden der Buchse miteinander verklammert, damit diese leicht in die Spritzgieß-/Spritzpreßmaschine eingeführt werden kann.
Zur weiteren Verbesserung der Verklammerung des Kunststoffes in den Löchern wird die Platine mit dem Stanzeinzug nach außen rundgeformt.

Weiterhin eröffnet das erfindungsgemäße Verfahren die Möglichkeit, Dichtungslippen aus dem verwendeten Kunststoff beidseitig an die Buchse anzuspritzen, so daß ein Schutz der Buchse gegen eintretende Fremdstoffe besteht und gleichzeitig das Schmiermittel (z. B. Fette) in den Lagerstellen verbleibt. In vielen Fällen kann somit auf eine separate Dichtung verzichtet werden.

Beim Abspritzvorgang können weiterhin Strukturen in die Oberfläche der inneren Laufschicht wie z.B. Nuten, Ausgleichsfasen oder dgl. mit angespritzt werden. Die teurere nachträgliche Herstellung entfällt.

Für besonders stark schwindende Kunststoffsorten bietet sich die Möglichkeit, unter Inkaufnahme eines zusätzlichen Arbeitsganges, äußere Nuten an dem Lagerelement vorzusehen und somit auch bei größten Schwindungen eine Verklammerung zu erzielen.

Die Erfindung wird anhand der folgenden Ausführungsbeispiele erläutert. Es zeigt
- Fig. 1: eine erfindungsgemäße Metall/Kunststoff-Verbundbuchse,
- Fig. 2: eine weitere Ausführungsform einer erfindungsgemäßen Verbundbuchse,
- Fig. 3: schematisch die Herstellung der erfindungsgemäßen Verbundbuchse,
- Fig. 4: die Schwindung des Kunststoffs bei der Abkühlung und
- Fig. 5: eine Anordnung von Fasen bei der Kunststoffschicht.

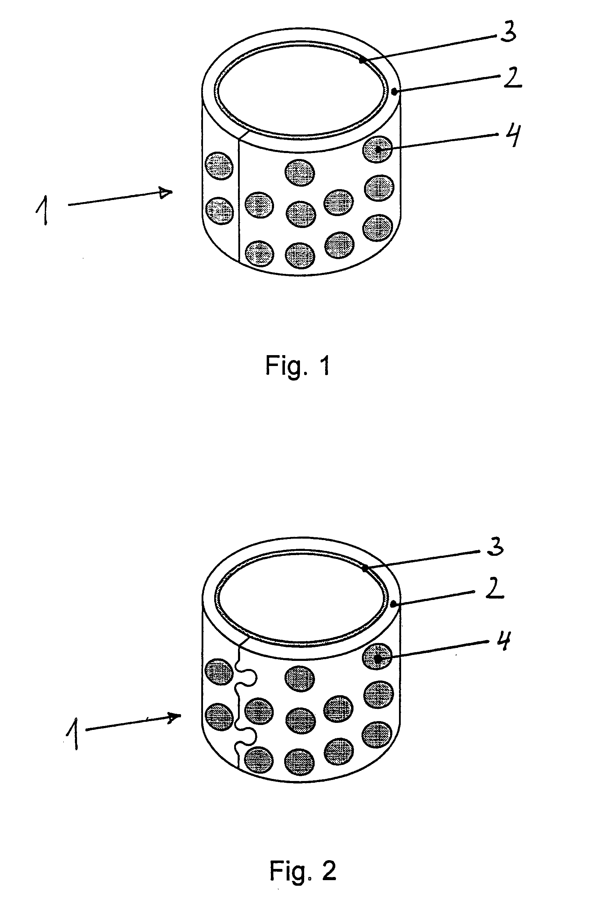

Fig. 1 zeigt eine fertige Metall/Kunststoff-Verbundbuchse 1, bestehend aus einem äußeren Metallträger 2 und einer Laufschicht 3 aus Kunststoff, die in Löchern 4 des Metallträgers 2 gehalten ist. Als Metallträger 2 werden vorzugsweise Bronzen oder Sondermessinge verwandt, die auch noch nach dem Verschleißen der Kunststoffschicht immer noch einen sehr guten Gleitlagerwerkstoff als Laufpartner darstellen. Als innere Laufschicht 3 eignen sich alle Kunststoffe mit Gleitlagereigenschaften, die bevorzugt zur Erzielung von Wartungsfreiheit bzw. Wartungsarmut mit Festschmierstoffen in Form von PTFE oder ähnlichem modifiziert sind.

Fig. 2 zeigt eine weitere Ausführungsform der Verbundbuchse 1, bei der die Enden des Metallträgers 2 miteinander verklammert sind.

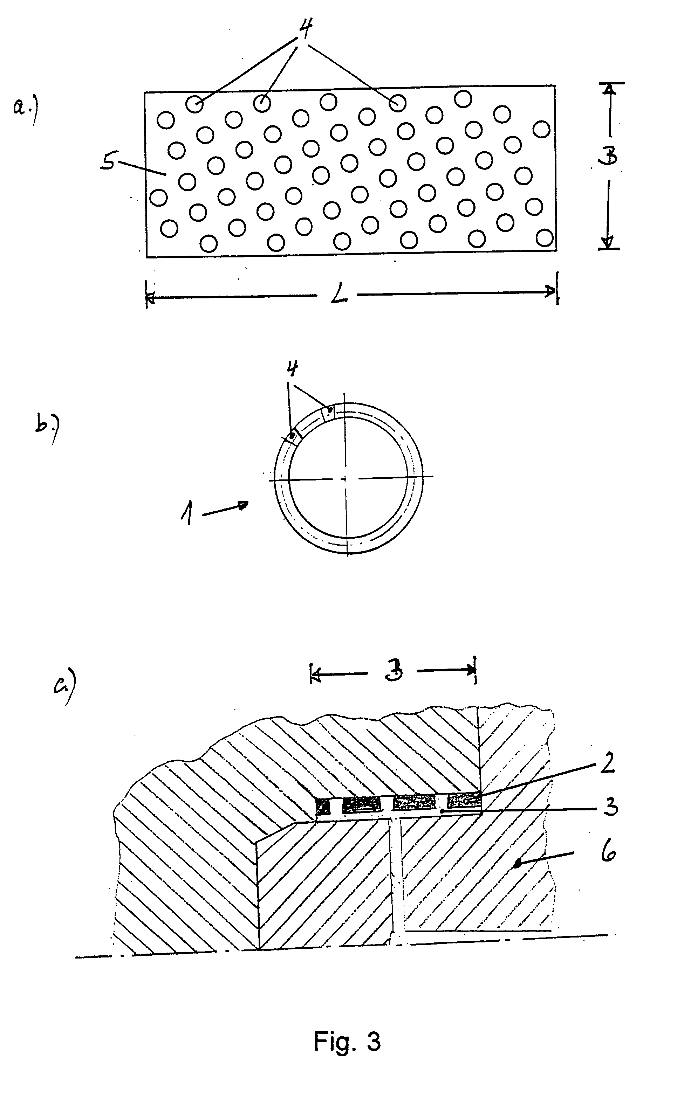

Fig. 3 zeigt schematisch die Herstellung einer erfindungsgemäßen Verbundbuchse 1. Ausgehend von einer metallischen Platine 5 mit Löchern 4 nach Fig. 3a, die bereits auf Breite B und Länge L der fertigen Buchse 1 zugeschnitten ist, wird die Platine 5 gemäß Fig. 3b einer Rundverformung unterworfen, so daß die Löcher 4 zur Buchsenmitte hin konisch verformt werden. Gemäß Fig. 3c erfolgt abschließend das Ausspritzen der Laufschicht 3 in einer mit Ziffer 6 angedeuteten Spritzgieß-/Spritzpreßmaschine.

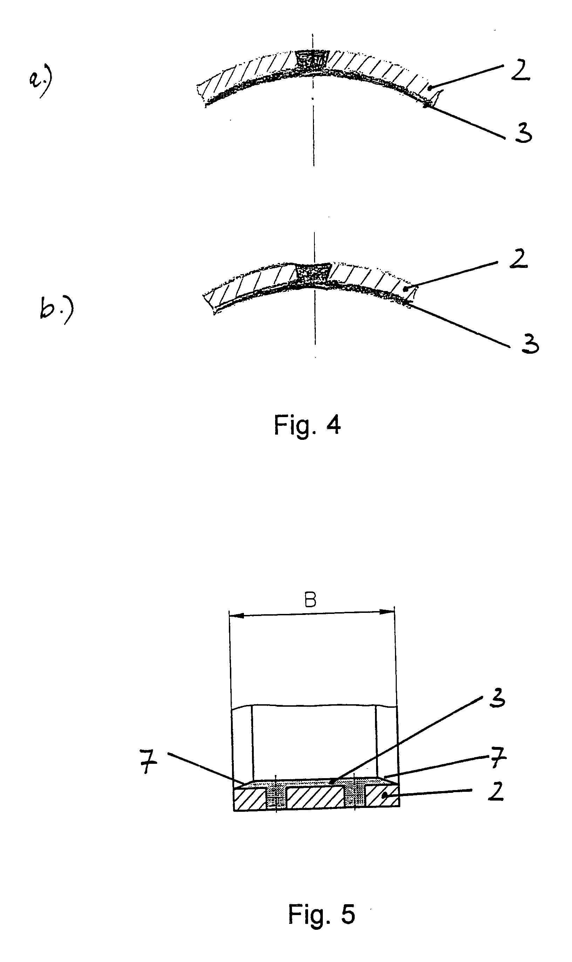

In Fig. 4a, b ist schematisch die Schwindung des Kunststoffs beim Abkühlvorgang angedeutet.

In Fig. 5 ist schematisch die Ausbildung von Ausgleichsfasen 7 bei der Kunststoffschicht 3 angedeutet.

### Zahlenbeispiel:

Es wurden Vergleichsversuche zwischen einer VBK-Buchse nach dem Stand der Technik und einer erfindungsgemäßen Buchse an einer Lagerprüfmaschine durchgeführt, in der das Gleitlager oszillierend zu einer feststehenden Welle bewegt wird. Über einen Hebelmechanismus kann über diese Welle eine einstellbare Belastungskraft in das zu prüfende Gleitlager geleitet werden.

Dazu wurde jeweils in ein Gehäuse mit einem Innendurchmesser von 34 mm (ø 34 H7) eine VBK-Buchse mit den Abmessungen: Innendurchmesser 30 mm x Außendurchmesser 34 mm x Breite 20 mm sowie eine erfindungsgemäße Buchse aus Sondermessing derselben Abmessungen eingepreßt. Die Laufschicht der Buchse bestand aus Polybutylenterephthalat (PBT) mit eingelagertem PTFE.

Als Gegenlaufpartner diente eine Welle aus gehärtetem Stahl mit einem Außendurchmesser von 30 mm. Zur Initialschmierung diente ein Li-verseiftes Schmierfett.

Bei den durchgeführten Langzeitversuchen zeigten sich für die erfindungsgemäße Buchse wesentlich günstigere Laufzeiten.

## Patentansprüche

1. Verfahren zur Herstellung einer gerollten Metall/Kunststoff-Verbundbuchse (1) mit den folgenden Verfahrensschritten in folgender Reihenfolge:
a) Zuschneiden eines metallischen Vormaterialbandes auf Breite B der Buchse (1),
b) Lochen des bereits auf Breite B zugeschnittenen Vormaterialbandes,
c) Ablängen auf Länge L, der Buchse (1) zur Bildung einer Platine (5),
d) Rundformen der Platine (5) zur Buchse (1),
e) Ausfüllen der Löcher (4) mit Kunststoff unter gleichzeitiger Ausbildung einer inneren Laufschicht (3) mit formschlüssiger Halterung des Kunststoffes in den konisch zur Buchsenmitte hin verformten Löchern (4), mitels Ausspritzung der rundgeformten Buchse (1) mit Kunststoff in einer Spritzgieß-/Spritzpreßmaschine (6) bei einer dem jeweiligen Kunststoff angepaßten Temperatur.

2. Verfahren nach Anspruch 1, **dadurch gekennzeichnet, daß** die Enden der Buchse (1) miteinander verklammert sind.

3. Verfahren nach Anspruch 1 oder 2, **dadurch gekennzeichnet,**
**daß** die Platine (5) mit dem Stanzeinzug nach außen rundgeformt wird.

4. Verfahren nach einem oder mehreren der Ansprüche 1 bis 3, **dadurch gekennzeichnet,**
**daß** an die Buchse (1) beidseitig Dichtungslippen aus dem verwendeten Kunststoff angespritzt werden.

5. Verfahren nach einem oder mehreren der Ansprüche 1 bis 4, **dadurch gekennzeichnet,**
**daß** beim Anspritzvorgang gleichzeitig in der Oberfläche der inneren Laufschicht (3) Strukturen, wie etwa Nuten, Ausgleichsfasen (7) oder dgl. ausgebildet werden.

## Claims

1. Method for manufacturing a rolled metal/plastics composite sleeve (1) having the following procedural steps in the following sequence:
a) cutting a metal strip of starting material to width B of the sleeve (1),
b) perforating the strip of starting material which has already been cut to width B,
c) cutting the sleeve (1) into sections of length (L) in order to form a plate (5),
d) rounding the plate (5) to produce the sleeve (1),
e) filling the perforations (4) with plastics material whilst at the same time forming an inner coating (3) with the plastics material being held in a positive-locking manner in the perforations (4), which are shaped so as to taper towards the centre of the sleeve, by injecting plastics material into the rounded sleeve (1) on an injection-moulding/transfermoulding machine (6) at a temperature suitable for the plastics material in each case.

2. Method according to claim 1, **characterised in that** the ends of the sleeve (1) are clamped together.

3. Method according to claim 1 or claim 2, **characterised in that**
the plate (5) is rounded with the punch indentation towards the outside.

4. Method according to any one or more of claims 1 to 3, **characterised in that**
sealing lips, produced from the plastics material used, are injected at both sides of the sleeve (1).

5. Method according to any one or more of claims 1 to 4,
**characterised in that**
structures, such as grooves, compensation chamfers (7) or the like, are formed in the surface of the inner coating (3) at the same time during the injection process.

## Revendications

1. Procédé de fabrication d'une douille composite métal-matière plastique roulée (1), présentant les étapes suivantes dans l'ordre suivant :
a) on coupe un feuillard précurseur métallique à la largeur B de la douille (1),
b) on perce le feuillard précurseur déjà coupé à la largeur B,
c) on met à la longueur L la douille (1) pour former une platine (5),
d) on met en forme ronde la platine (5) pour former la douille (1),
e) on remplit les trous (4) avec de la matière plastique en réalisant simultanément une couche de roulement intérieure (3) avec monture en coopération de formes de la matière plastique dans les trous (4) déformés coniquement vers le centre de la douille par remplissage de la douille (1) mise en forme ronde en injectant de la matière plastique dans une machine de coulée/pressage par injection (6) à une température adaptée à la matière plastique respective.

2. Procédé selon la revendication 1, **caractérisé en ce que** les extrémités de la douille (1) sont agrafées l'une avec l'autre.

3. Procédé selon l'une ou l'autre des revendications 1 et 2, **caractérisé en ce que** la platine (5) est mise en forme ronde, le retrait de poinçonnage étant dirigé vers l'extérieur.

4. Procédé selon l'une ou plusieurs des revendications 1 à 3, **caractérisé en ce que** l'on injecte sur la douille (1), des deux côtés, des lèvres d'étanchéité de la matière plastique utilisée.

5. Procédé selon l'une ou plusieurs des revendications 1 à 4, **caractérisé en ce que** lors de l'opération d'injection on réalise dans la surface de la couche de roulement intérieure (3) des structures, telles que des gorges, des chanfreins de compensation (7) ou similaires.
